# EUROPEAN PATENT SPECIFICATION

(11) **EP 4 499 466 B1**
(45) Date of publication and mention of the grant of the patent: **04.03.2026**
(21) Application number: 23717646.6
(22) Date of filing: 24.03.2023
(51) Int. Cl.: B60T 8/171, B60T 7/08, B60T 13/74, F16D 55/22, F16D 65/18, F16D 55/226, F16D 55/228, B60T 8/172

(54) **METHOD OF CONTROLLING A BRAKING SYSTEM AND RELATED BRAKING SYSTEM**
VERFAHREN ZUR STEUERUNG EINES BREMSSYSTEMS UND ZUGEHÖRIGES BREMSSYSTEM
PROCÉDÉ DE COMMANDE DE SYSTÈME DE FREINAGE ET SYSTÈME DE FREINAGE ASSOCIÉ

(30) Priority: 25.03.2022 IT 202200005954
(43) Date of publication of application: 05.02.2025
(73) Proprietor: Brembo S.p.A., 24035 Curno (Bergamo) (IT)
(72) Inventor: TARANTINI, Alfonso, 24035 Curno, Bergamo (IT); BONALUMI, Eugenio, 24035 Curno, Bergamo (IT)
(74) Representative: Di Biase, Fabio
(86) International application number: PCT/IB2023/052902
(87) International publication number: WO 2023/180996

(56) References cited:
- US-A1- 2015 217 737
- US-A1- 2015 246 662
- US-A1- 2016 339 888
- US-A1- 2017 106 848
- US-A1- 2019 023 204

## Description

### . Field of the invention

**.** The present invention relates to a method of controlling a braking system, in particular of a vehicle, and to a braking system of a vehicle.

### . Background art

**.** Motorcars and in general vehicles with more than two wheels intended to transport passengers on roads, are provided with a hand parking brake, the function of which is to lock the wheels of the vehicle thus preventing the movement thereof when it is parked.

**.** In modern braking systems, e.g., those provided with electronic Brake-By-Wire (BBW) technology, the hand parking brake is replaced by an Electric Parking Brake (EPB). A parking brake mechanism operated with an electric motor is known from US 2016 339888 A1.

**.** For all intents and purposes, the EPB electric parking brake can be considered a sub-system of an electronic braking system with BBW technology which is used for service braking.

**.** In greater detail, using the EPB subsystem, the driver can activate the wheel-locking mechanism by means of an actuating device, such as an appropriate button or other automatic functions managed by an electronic processing unit, such as signal logics related to the ignition key, the gear engagement, and the accelerator pedal that, once activated, sends a request for parking-braking activation to an electronic control unit of the vehicle, which electrically actuates the brake pads to lock the brake discs and therefore the movement of the vehicle.

**.** Vice versa, when restarting, the driver can deactivate the wheel locking mechanism by means of an actuating device that, once activated, sends a parking-braking deactivation request to an electronic control unit of the vehicle, which electrically actuates the brake pads to unlock the brake discs and therefore the movement of the vehicle.

**.** Moreover, in addition to replacing the parking-braking function traditionally performed by the hand parking brake, the EPB subsystem is configured to provide automatic supporting functions to the driver, including the so-called "AutoHold" function, i.e., the function allowing the wheels to be locked automatically and without the driver's request when the vehicle is stationary, e.g., uphill, and to be released as soon as the driver presses the accelerator pedal of the vehicle.

**.** The need is felt to minimize the time interval which elapses from the instant in which the deactivation of the parking braking is required to the instant in which the vehicle is ready to restart.

**.** Such a time interval thus elapses from the moment in which the electronic control unit of the vehicle is requested to release the braking force by completely opening the parking brake until there is no longer any residual braking torque acting on the at least two brake discs of the vehicle, caused by the contact with the pads.

**.** The absence of braking force acting on the brake discs can be determinable by a position sensor which monitors, either directly or indirectly, the position of the pads with respect to the respective brake disc, or by a current sensor configured to detect, either directly or indirectly, the force actuated by the pads on the respective brake disc.

**.** In braking systems comprising at least two brake calipers, either fixed or floating, each fixed or floating brake caliper is associated with a respective wheel of the vehicle and comprises at least one pad facing a brake disc. The at least one pad is actuatable either towards or away from the brake disc by actuating at least one actuator.

**.** The respective actuators of the at least two brake calipers in the braking system are controlled by the electronic control unit.

**.** The respective actuators of the at least two brake calipers can be controlled either in parallel or in a selective manner. If the actuators cannot be controlled in parallel, i.e., at the same time, due to energy or structural constraints, the respective actuators of the at least two brake calipers are controlled in a selective manner, i.e., in sequence. According to the latter control logic, the electronic control unit is configured to control the actuation, and the consequent movement, of the one or more actuators of only one brake caliper at a time.

**.** For each of the two brake calipers, the step of releasing the parking braking can be divided into three successive steps, namely:
- an inrush step Ph1, which elapses from the instant in which the electronic control unit commands the at least one actuator of the respective brake caliper to move, to the instant in which the at least one actuator starts to move, and in which the braking force acting on the brake disc remains constant;
- a force release step Ph2, which elapses from the instant in which the force actuated by the at least one actuator on the brake disc begins to reduce up to zero;
- a separating step Ph3, in which the at least one actuator continues to move so as to ensure a safe separation between the pad and the brake disc, so as to ensure no residual braking force, where the third step Ph3 elapses from the instant in which the force actuated by the at least one actuator is reduced to zero, to the instant in which the at least one actuator completes the safe separation.

**.** In the known control logics, the electronic control unit is configured to actuate the complete release of the parking braking by commanding the first of the at least two brake calipers to perform the steps Ph1, Ph2, and Ph3, and then commanding the second of the at least two brake calipers to perform the steps Ph1, Ph2, and Ph3.

### . Solution

**.** It is the object of the present invention to provide a method of controlling a braking system and a braking system such as to obviate at least some of the drawbacks of the prior art.

**.** It is a particular object of the present invention to provide a method of controlling a braking system and a braking system such as to minimize the time interval which elapses from the instant in which the deactivation of the parking braking is required to the instant in which the vehicle is ready to restart, i.e., in which the braking force acting on the brake disc is reduced to zero.

**.** It is a further object of the present invention to provide a control method, and a braking system configured to perform the control method, simplified and such as to have fewer energy and structural constraints.

**.** These and other objects are achieved by a method of controlling a braking system and a braking system according to the independent claims.

**.** The dependent claims relate to preferred and advantageous embodiments of the present invention.

### . Drawings

**.** In order to better understand the invention and appreciate the advantages thereof, some non-limiting exemplary embodiments thereof will be described below with reference to the accompanying drawings, in which:

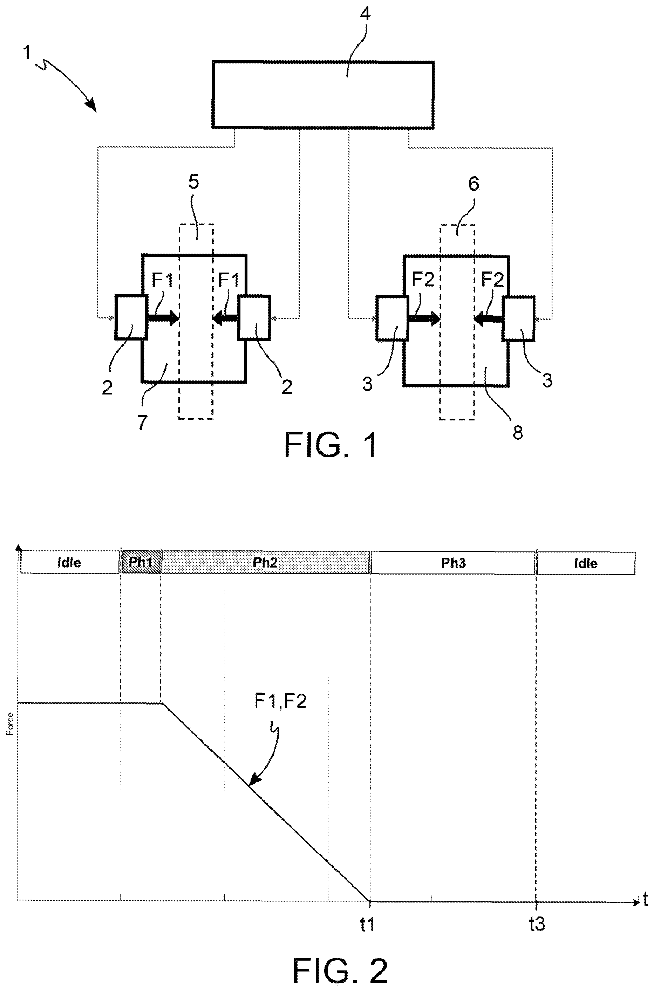

- figure 1 diagrammatically shows a braking system, according to an embodiment of the invention;
- figure 2 is a diagram showing the force actuated by a brake caliper of a braking system, according to an embodiment of the invention;
- figure 3 is a diagram showing the force actuated by the at least two brake calipers of a braking system, according to the prior art;
- figure 4 is a diagram showing the force actuated by the at least two brake calipers of a braking system, according to an embodiment of the invention.

### . Description of some preferred embodiments

**.** A method of controlling a braking system 1 of a vehicle for deactivating a parking-braking force actuated by the braking system 1 is described below with reference to the figures.

**.** The braking system 1 is of the type comprising at least one first brake caliper 7 and one second brake caliper 8. The first brake caliper 7 is associable with one wheel of the vehicle, while the second brake caliper 8 is associable with a further wheel of the vehicle.

**.** The first brake caliper 7 comprises:
- a first brake disc 5;
- at least one first pad facing the first brake disc 5;
- at least one first actuator 2, configured to apply and release a first braking force F1 on the at least one first pad, so as to move the at least one first pad from an open position, in which the at least one first pad is positioned at a maximum distance from the first brake disc 5 and does not actuate a parking-braking force, to a closed position in which the at least one first pad is biased against the first brake disc 5 and actuates a parking-braking force, and vice versa.

**.** The second brake caliper 8 comprises:
- a second brake disc 6;
- at least one second pad facing the second brake disc;
- at least one second actuator 3, configured to apply and release a second braking force F2 on the at least one second pad so as to move the at least one second pad from an open position, in which the at least one second pad is positioned at a maximum distance from the second brake disc 6 and does not actuate a braking force, to a closed position in which the at least one second pad is biased against the second brake disc 6 and actuates a parking-braking force, and vice versa.

**.** The braking system 1 is of the type further comprising:
- an electronic processing unit 4, configured to control the actuation of the at least one first actuator 2 and the at least one second actuator 3;
- detection means, operatively connected to the electronic processing unit 4, configured to detect, either directly or indirectly, the value of the first braking force F1 actuated by the at least one first actuator 2 on the at least one first pad, and to detect, either directly or indirectly, the value of the second braking force F2 actuated by the at least one second actuator 3 on the at least one second pad.

**.** The method comprises the steps of:
- actuating, by means of the electronic processing unit 4, the at least one first actuator 2 so as to release the first braking force F1 and reduce the value of the first braking force F1;
- detecting the value of the first braking force F1 during the actuation of the at least one first actuator 2 and by the detection means;
- in the first instant of time t1 in which it is detected that the first braking force F1 is reduced to a value substantially equal to zero, stopping the at least one first actuator 2 and actuating the at least one second actuator 3, by means of the electronic processing unit 4, so as to release the second braking force F2 and reduce the value of the second braking force F2;
- reducing the value of the second braking force F2 to a value substantially equal to zero.

**.** Advantageously, the control method according to the present invention minimizes the time interval which elapses from the instant in which the parking-braking deactivation is required to a zero force time instant t0 in which the vehicle is ready to restart, i.e., when the braking force acting on both the first and second brake discs is reduced to zero.

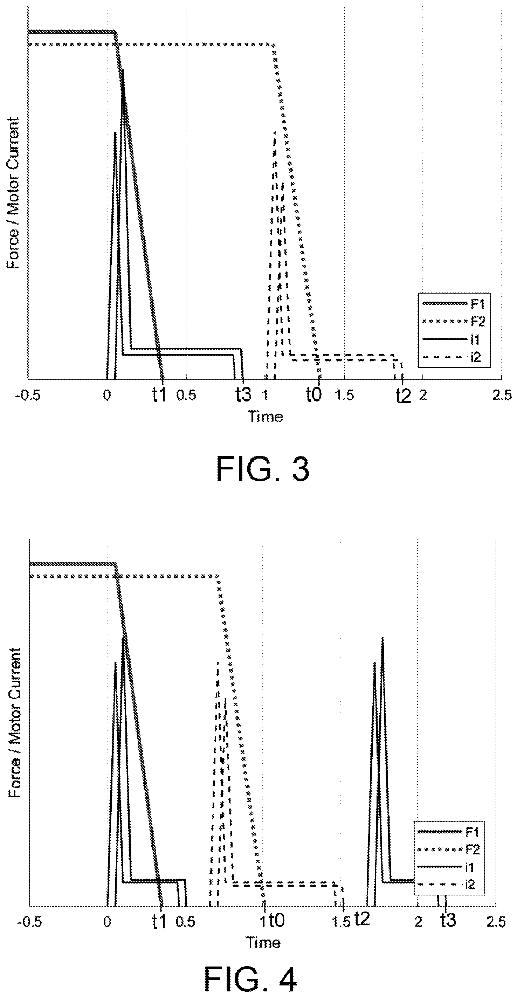

**.** Indeed, as can be seen by comparing Fig. 4, showing a control method according to the present invention, and Fig. 3, showing the control method according to the prior art, the method according to the present invention reduces the time required to cancel the braking force acting on both brake discs, i.e., minimizes the time required for achieving the condition in which, in the zero force time instant t0, the force actuated by the first and second brake calipers 7,8 on the respective first and second brake discs 5,6 is substantially equal to zero, and the vehicle is ready to restart.

**.** Advantageously, the first brake caliper 7 and the second brake caliper 8 are fixed or floating brake calipers.

**.** Preferably, the first and second brake calipers 8 are associable with either the front wheel pair or the rear wheel pair of a vehicle, respectively.

**.** Advantageously, the method according to the present description is applicable to braking systems comprising a first and a second brake caliper, where both the first and second brake calipers comprise two pads positioned to be opposite to a brake disc, where the two opposite pads of each brake caliper are actuatable against the brake disc by at least one actuator, preferably by two respective actuators. Therefore, in the present description, the terms "first pad" and "second pad" are also to be understood as "first pair of opposite pads" and "second pair of opposite pads". Similarly, "at least one first actuator" also means the one or more actuators acting on the first pair of pads, and "at least one second actuator" also means the one or more actuators acting on the second pair of pads. Similarly, "first braking force F1" and "second braking force F2" also mean the force applied to the first pair of opposite pads of the first brake caliper 7 and the force applied to the second pair of opposite pads of the second brake caliper 8.

**.** According to an embodiment, the method comprises after the step of stopping the at least one first actuator 2 and actuating the at least one second actuator 3, by means of the electronic processing unit 4, so as to release the second braking force F2 and reduce the value of the second braking force F2, the steps of:
- detecting the value of the second braking force F2 during the actuation of the at least one second actuator 3 and by the detection means;
- in the instant in which it is detected that the second braking force F2 is reduced to a value substantially equal to zero, continuing the actuation of the at least one second actuator 3, preferably without any temporary stop of the at least one second actuator 3, so as to separate the at least one second pad from the second brake disc 6 and move the at least one second pad towards the open position;
- detecting the position of the at least one second pad, either directly or indirectly, during the actuation of the at least one second pad and by the detection means;
- in the second instant of time t2 in which it is detected that the at least one second pad is substantially positioned in the open position, stopping the at least one second actuator 3 and actuating the at least one first actuator 2, by means of the electronic processing unit 4, so as to separate the at least one first pad from the first brake disc 5 and move the at least one first pad towards the open position.

**.** Optionally, the method comprises the following steps of:
- detecting the position of the at least one first pad, either directly or indirectly, during the actuation of the at least one first pad and by the detection means;
- in the third time instant t3 in which it is detected that the at least one first pad is substantially positioned in the open position, stopping the at least one first actuator 2.

**.** According to an alternative embodiment, the method comprises, after the step of stopping the at least one first actuator 2 and actuating the at least one second actuator 3, by means of the electronic processing unit 4, so as to release the second braking force F2 and reduce the value of the second braking force F2, the steps of:
- detecting the value of the second braking force F2 during the actuation of the at least one second pad and by the detection means;
- in the instant in which it is detected that the second braking force F2 is reduced to a value substantially equal to zero, stopping the actuation of the at least one second actuator 3 and actuating the at least one first actuator 2, by means of the electronic processing unit 4, so as to separate the at least one first pad from the first brake disc 5 and move the at least one first pad towards the open position;
- detecting the position of the at least one first pad, either directly or indirectly, during the actuation of the at least one first pad and by the detection means;
- in the instant in which it is detected that the at least one first pad is substantially positioned in the open position, stopping the at least one first actuator 2 and actuating the at least one second actuator 3, by means of the electronic processing unit 4, so as to separate the at least one second pad from the second brake disc 6 and move the at least one second pad towards the open position;

**.** Optionally, the method comprises the following steps of:
- detecting the position of the at least one second pad, either directly or indirectly, during the actuation of the at least one second pad and by the detection means;
- in the instant in which it is detected that the at least one second pad is substantially positioned in the open position, stopping the at least one second actuator 3.

**.** According to an embodiment, the step of detecting, by the detection means, the value of the first braking force F1 comprises the following steps:
- detecting, by the detection means, the angular position of the at least one first actuator 2; and
- calculating, by means of the electronic processing unit 4, the value of the first braking force F1 based on the angular position of the at least one first actuator 2.

**.** Alternatively, the step of detecting, by the detection means, the value of the second braking force F1 comprises the following steps:
- detecting the value of a first supply current i1 supplying the at least one first actuator 2; and
- calculating, by means of the electronic processing unit 4, the value of the first braking force F1 based on the value of the first supply current i1 supplying the at least one first actuator 2.

**.** According to an embodiment, in which the step of detecting, by the detection means, the value of the second braking F2 comprises the following steps:
- detecting, by the detection means, the angular position of the at least one second actuator 3; and
- calculating, by means of the electronic processing unit 4, the value of the second braking force F1 based on the angular position of the at least one second actuator 3.

**.** Alternatively, the step of detecting, by the detection means, the value of the second braking force F2 comprises the following steps:
- detecting the value of a second supply current i2 supplying the at least one second actuator 3; and
- calculating, by means of the electronic processing unit 4, the value of the second braking force F1 based on the value of the second supply current i2 supplying the at least one second actuator 3.

**.** According to an embodiment, the step of either directly or indirectly detecting the position of the at least one second pad by the detection means comprises:
- detecting the elapsing of a predetermined time interval, starting from the instant in which it is detected that the second braking force F2 is reduced to a value substantially equal to zero and by the detection means;
- associating the positioning of the at least one second pad in the open position at the end of the predetermined time interval and by means of the electronic processing unit 4.

**.** Alternatively, the step of either directly or indirectly detecting the position of the at least one second pad by the detection means comprises:
- detecting, by the detection means, the angular position of the at least one second actuator 3;
- associating, by means of the electronic processing unit 4, the positioning of the at least one second pad in the open position with a predetermined angular position of the at least one second actuator 3.

**.** According to an embodiment, the step of either directly or indirectly detecting the position of the at least one first pad during the actuation of the first pad and by the detection means, comprises:
- detecting the elapsing of a predetermined time interval, starting from the instant in which the at least one second actuator 3 is stopped and by the detection means;
- associating the positioning of the at least one first pad in the open position at the end of the predetermined time interval and by means of the electronic processing unit 4.

**.** Alternatively, the step of detecting the position of the at least one first pad, either directly or indirectly, during the actuation of the at least one first pad and by the detection means comprises:
- detecting, by the detection means, the angular position of the at least one first actuator 2;
- associating, by means of the electronic processing unit 4, the positioning of the at least one first pad in the open position with a predetermined angular position of the at least one first actuator 2.

**.** According to an embodiment, the step of actuating, by means of the electronic processing unit 4, the at least one first actuator 2 so as to release the first braking force F1 and reducing the value of the first braking force F1, is actuated upon the reception of a parking-braking force deactivation request signal by the electronic processing unit 4.

**.** Furthermore, the parking-braking force deactivation request signal is sent by an actuating device operatively connected to the electronic processing unit 4, upon actuation of said actuating device.

**.** The actuating device is actuatable by a user.

**.** According to an embodiment, the method comprises, after the step of stopping the at least one first actuator 2 in the instant in which it is detected that the at least one first pad is substantially positioned in the open position, the step of:
- sending, from the electronic processing unit 4 to a signaling device operatively connected to the electronic processing unit 4, a parking-braking force deactivation signal.

**.** Furthermore, the parking-braking force deactivation signal is optionally viewable by a user by means of the signaling device.

**.** According to an embodiment, the previously described method is applicable to a braking system 1 of the type comprising a first brake caliper 7 and a second brake caliper 8, in which the first brake caliper 7 comprises:
- a pair of first pads positioned to be opposite to the first brake disc 5;
- at least one pair of first actuators 2, configured to apply and release a first braking force F1 on the pair of first pads, so as to move the pair of first pads from an open position, in which both first pads are positioned at a maximum distance from the first brake disc 5 and do not actuate a parking-braking force, to a closed position, in which both first pads are biased against the first brake disc 5 and actuate a parking-braking force, and vice versa; and where said second brake caliper 8 comprises:
   - a pair of second pads positioned to be opposite to the second brake disc 6;
   - at least one pair of second actuators 3, configured to apply and release a second braking force F2 on the pair of second pads, so as to move the pair of second pads from an open position, in which both second pads are positioned at a maximum distance from the second brake disc 6 and do not actuate a parking-braking force, to a closed position, in which both second pads are biased against the second brake disc 6 and actuate a parking-braking force, and vice versa.

**.** According to a further aspect of the invention, a braking system 1 of a vehicle is configured to activate and deactivate a parking-braking force.

**.** The braking system 1 comprises at least one first brake caliper 7 and one second brake caliper 8. The first brake caliper 7 is associable with one wheel of the vehicle, while the second brake caliper 8 is associable with a further wheel of the vehicle.

**.** The first brake caliper 7 comprises:
- a first brake disc 5;
- at least one first pad facing the first brake disc 5;
- at least one first actuator 2, configured to apply and release a first braking force F1 on the at least one first pad, so as to move the at least one first pad from an open position, in which the at least one first pad is positioned at a maximum distance from the first brake disc 5 and does not actuate a parking-braking force, to a closed position, in which the at least one first pad is biased against the first brake disc 5 and applies a parking-braking force, and vice versa.

**.** The second brake caliper 8 comprises:
- a second brake disc 6;
- at least one second pad positioned to face the second brake disc 6;
- at least one second actuator 3, configured to apply and release a second braking force F2 on the at least one second pad so as to move the at least one second pad from an open position, in which the at least one second pad is positioned at a maximum distance from the second brake disc 6 and does not actuate a braking force, to a closed position, in which the at least one second pad is biased against the second brake disc 6 and applies a parking-braking force, and vice versa.

**.** The braking system 1 further comprises:
- an electronic processing unit 4, configured to control the actuation of the at least one first actuator 2 and the at least one second actuator 3;
- detection means, operatively connected to the electronic processing unit 4, configured to detect, either directly or indirectly, the value of the first braking force F1 actuated by the at least one first actuator 2 on the at least one first pad, and to detect, either directly or indirectly, the value of the second braking force F2 actuated by the at least one second actuator 3 on the at least one second pad.

**.** Furthermore, the braking system 1 is configured to deactivate the parking-braking force by performing a method as previously described, and not repeated here to avoid redundancy.

**.** Advantageously, a braking system 1 thus configured allows minimizing the time interval which elapses from the instant in which the deactivation of the parking-braking is required to a zero force time instant t0 in which the vehicle is ready to restart, i.e., in which the parking-braking force actuated by the braking system is reduced to zero.

**.** Advantageously, the first brake caliper 7 and the second brake caliper 8 are fixed or floating brake calipers.

**.** According to an embodiment, the detection means comprise an angular position detector, preferably an encoder, configured to detect the angular position of the at least one first actuator 2 and/or the at least one second actuator 3.

**.** Alternatively or additionally, the detection means comprises a current detector, preferably an ammeter, configured to detect the value of a supply current i1, i2 which supplies either the at least one first actuator 2 or the at least one second actuator 3.

**.** The electronic processing unit 4 comprises a calculator configured to calculate the value of the first braking force F1 and/or the second braking force F2 based on the angular position of the at least one first actuator 2 or the at least one second actuator 3, respectively.

**.** Alternatively or additionally, the calculator is configured to calculate the value of the first braking force F1 and/or the second braking force F2 based on the value of the supply current i1, i2 supplying the at least one first actuator 2 or the at least one second actuator 3, respectively.

**.** According to an embodiment, the system 1 comprises an actuating device operatively connected to the electronic processing unit 4.

**.** Furthermore, the electronic processing unit 4 is configured to actuate the at least one first actuator 2 so as to release the first braking force F1 and reduce the value of the first braking force F1, upon the reception, by the electronic processing unit 4, of a parking-braking force deactivation request signal.

**.** The parking-braking force deactivation request signal is sent by the actuating device upon actuation of said actuating device.

**.** The actuating device is actuatable by a user.

**.** Advantageously, the actuating device is positionable in the passenger compartment of the vehicle close to the position occupied by the user.

**.** The actuating device can be, by way of example, an appropriate button, an ignition key, a gear shift actuator, an acceleration pedal or different pedal, or a device connected to automatic functions managed by the electronic processing unit 4 or an appropriate electronic processing unit.

**.** According to an embodiment, the braking system 1 comprises a signaling device operatively connected to the electronic processing unit 4.

**.** Furthermore, the electronic processing unit 4 is configured to send a parking-braking force deactivation signal to the signaling device.

**.** The parking-braking force deactivation signal is viewable by a user by means of the signaling device.

**.** The signaling device can be, for example, a warning light, or a digital screen positioned inside the passenger compartment of the vehicle close to the position occupied by the user.

**.** According to an embodiment, the first brake caliper 7 comprises:
- a pair of first pads positioned to be opposite to the first brake disc 5;
- at least one pair of first actuators 2, configured to apply and release a first braking force F1 on the pair of first pads, so as to move the pair of first pads from an open position, in which both first pads are positioned at a maximum distance from the first brake disc 5 and do not actuate a parking-braking force, to a closed position, in which both first pads are biased against the first brake disc 5 and actuate a parking-braking force, and vice versa.

**.** Furthermore, the second brake caliper 8 comprises:
- a pair of second pads positioned to be opposite to the second brake disc 6;
- at least one pair of second actuators 3, configured to apply and release a second braking force F2 on the pair of second pads, so as to move the pair of second pads from an open position, in which both second pads are positioned at a maximum distance from the second brake disc 6 and do not actuate a parking-braking force, to a closed position, in which both second pads are biased against the second brake disc 6 and actuate a parking-braking force, and vice versa.

**.** Obviously, those skilled in the art will be able to make changes or adaptations to the present invention, without however departing from the scope of the following claims.

### LIST OF REFERENCE SIGNS

**1.** Braking system
**2.** First actuator
**3.** Second actuator
**4.** Electronic processing unit
**5.** First brake disc
**6.** Second brake disc
**7.** First brake caliper
**8.** Second brake caliper
**F1.** First braking force
**F2.** Second braking force
**i1.** First supply current
**i2.** Second supply current
**t0.** Zero force time instant
**t1.** First time instant
**t2.** Second time instant
**t3.** Third time instant

## Claims

1. A method of controlling a braking system (1) of a vehicle for deactivating a parking-braking force actuated by the braking system (1), the braking system (1) being of the type comprising at least:
- a first brake caliper (7) comprising:
- a first brake disc (5);
- at least one first brake pad facing the first brake disc (5);
- at least one first actuator (2), configured to apply and release a first braking force (F1) on the at least one first pad, so as to move the at least one first pad from an open position, in which the at least one first pad is positioned at a maximum distance from the first brake disc (5) and does not actuate a parking-braking force, to a closed position in which the at least one first pad is biased against the first brake disc (5) and applies a parking-braking force, and vice versa;
- a second brake caliper (8) comprising:
- a second brake disc (6);
- at least one second brake pad facing the second brake disc (6);
- at least one second actuator (3), configured to apply and release a second braking force (F2) on the at least one second pad so as to move the at least one second pad from an open position, in which the at least one second pad is positioned at a maximum distance from the second brake disc (6) and does not actuate a braking force, to a closed position in which the at least one second pad is biased against the second brake disc (6) and applies a parking-braking force, and vice versa;
- an electronic processing unit (4), configured to control the actuation of the at least one first actuator (2) of the first brake caliper (7) and the at least one second actuator (3) of the second brake caliper (8);
- detection means, operatively connected to the electronic processing unit (4), configured to detect, either directly or indirectly, the value of the first braking force (F1) actuated by the at least one first actuator (2) on the at least one first pad, and to detect, either directly or indirectly, the value of the second braking force (F2) actuated by the at least one second actuator (3) on the at least one second pad,
the method being **characterized by** the steps of:
- by means of the electronic processing unit (4), actuating at least one first actuator (2) of the first brake caliper (7) so as to release the first brake force (F1) and reduce the value of the first brake force (F1);
- detecting the value of the first braking force (F1) during the actuation of at least one first actuator (2) and by means of the detection means;
- at a first instant of time (t1) in which it is detected that the first braking force (F1) is reduced to a value substantially equal to zero, stopping the at least one first actuator (2) and actuating the at least one second actuator (3), by means of the electronic processing unit (4), so as to release the second braking force (F2) and reduce the value of the second braking force (F2);
- reducing the value of the second braking force (F2) to a value substantially equal to zero.

2. A method according to claim 1, comprising after the step of stopping the at least one first actuator (2) and actuating the at least one second actuator (3), by means of the electronic processing unit (4), so as to release the second braking force (F2) and reduce the value of the second braking force (F2), the steps of:
- detecting the value of the second braking force (F2) during the actuation of at least one second actuator (3) and by means of the detection means;
- in the instant in which it is detected that the second braking force (F2) is reduced to a value substantially equal to zero, continuing the actuation of the at least one second actuator (3) so as to separate the at least one second brake pad from the second brake disc (6) and move the at least one second brake pad towards the open position;
- detecting the position of the at least one second pad, either directly or indirectly, during the actuation of the at least one second pad and by means of the detection means;
- at a second instant of time (t2) in which it is detected that the at least one second pad is positioned substantially in the open position, stopping the at least one second actuator (3) and actuating the at least one first actuator (2), by means of the electronic processing unit (4), so as to separate the at least one first pad from the first brake disc (5) and move the at least one first pad towards the open position;
and optionally:
- detecting the position of the at least one first pad, either directly or indirectly, during the actuation of the at least one first pad and by means of the detection means;
- stopping the at least one first actuator (2) in a third time instant (t3) in which it is detected that the at least one first pad is positioned substantially in the open position.

3. A method according to claim 1, comprising after the step of stopping the at least one first actuator (2) and actuating the at least one second actuator (3), by means of the electronic processing unit (4), so as to release the second braking force (F2) and reduce the value of the second braking force (F2), the steps of:
- detecting the value of the second braking force (F2) during the actuation of at least one second pad and by means of the detection means;
- in the instant in which it is detected that the second braking force (F2) is reduced to a value substantially equal to zero, stopping the actuation of the at least one second actuator (3) to actuate the at least one first actuator (2), by means of the electronic processing unit (4) so as to separate the at least one first brake pad from the first brake disc (5) and move the at least one first brake pad towards the open position;
- detecting the position of the at least one first pad, either directly or indirectly, during the actuation of the at least one first pad and by means of the detection means;
- in the instant of time in which it is detected that the at least one first pad is positioned substantially in the open position, stopping the at least one first actuator (2) and actuating the at least one second actuator (3), by means of the electronic processing unit (4), so as to separate the at least one second pad from the second brake disc (6) and move the at least one second pad towards the open position;
and optionally:
- detecting the position of the at least one second pad, either directly or indirectly, during the actuation of the at least one second pad and by means of the detection means;
- stopping the at least one second actuator (3) in an instant in which it is detected that the at least one second pad is positioned substantially in the open position.

4. A method according to any one of the preceding claims, wherein the step of detecting, by means of the detection means, the value of the first braking force (F1) comprises:
- detecting the angular position of the at least one first actuator (2) by means of the detection means; and
- calculating, by means of the electronic processing unit (4), the value of the first braking force (F1) based on the angular position of at least one first actuator (2); or
- detecting the value of a first supply current (i1) which feeds the at least one first actuator (2); and
- calculating, by means of the electronic processing unit (4), the value of the first braking force (F1) based on the value of the first supply current (i1) supplying the at least one first actuator (2),
and/or
wherein the step of detecting, by means of the detection means, the value of the second braking force (F2) comprises:
- detecting the angular position of the at least one second actuator (3) by means of the detection means; and
- calculating, by means of the electronic processing unit (4), the value of the second braking force (F1) based on the angular position of at least one second actuator (3); or
- detecting the value of a second supply current (i2) which feeds the at least one second actuator (3); and
- calculating, by means of the electronic processing unit (4), the value of the second braking force (F2) based on the value of the second supply current (i2) supplying the at least one second actuator (3).

5. A method according to claim 2, wherein the step of directly or indirectly detecting the position of the at least one second pad by means of the detection means comprises:
- detecting the elapsing of a predetermined time interval, starting from the instant in which it is detected that the second braking force (F2) is reduced to a value substantially equal to zero, and by means of the detection means;
- associating the positioning of the at least one second pad in the open position at the end of the predetermined time interval and by means of the electronic processing unit (4);
or comprises:
- detecting the angular position of the at least one second actuator (3) by means of the detection means;
- associating the positioning of the at least one second pad in the open position with a predetermined angular position of the at least one second actuator (3) by means of the electronic processing unit (4).

6. A method according to claim 5, wherein the step of either directly or indirectly detecting the position of the at least one first pad during the actuation of the at least one first pad and by means of the detection means comprises:
- detecting the elapsing of a predetermined time interval, starting from the instant in which the at least one second actuator (3) is stopped, and by means of the detection means;
- associating the positioning of at least one first pad in the open position at the end of the predetermined time interval and by means of the electronic processing unit (4),
or comprises:
- detecting the angular position of the at least one first actuator (2) by means of the detection means;
- associating, by means of the electronic processing unit (4), the positioning of the at least one first pad in the open position with a predetermined angular position of the at least one first actuator (2) .

7. A method according to any one of the preceding claims, wherein the step of actuating, by means of the electronic processing unit (4), the at least one first actuator (2) so as to release the first braking force (F1) and reduce the value of the first braking force (F1), is actuated upon the reception of a parking-braking brake force deactivation request signal by the electronic processing unit (4),
wherein the parking-braking force deactivation request signal is sent by an actuating device operatively connected to the electronic processing unit (4), upon actuation of said actuating device,
said actuating device being actuatable by a user.

8. A method according to claim 2 comprising, after the step of stopping the at least one first actuator (2) at the instant in which it is detected that the at least one first pad is positioned substantially in the open position, the step of:
- sending, from the electronic processing unit (4) to a signaling device operatively connected to the electronic processing unit (4), a parking-braking force deactivation signal;
wherein the parking-braking force deactivation signal is optionally viewable by a user by means of the signaling device.

9. A method according to any one of the preceding claims, for controlling a brake system (1) of the type comprising a first brake caliper (7) and a second brake caliper (8),
wherein said first brake caliper (7) comprises:
- a pair of first pads positioned opposite to the first brake disc (5);
- at least one pair of first actuators (2), configured to apply and release a first braking force (F1) on the pair of first pads, so as to move the pair of first pads from an open position in which both first pads are positioned at a maximum distance from the first brake disc (5) and do not actuate a parking-braking force, to a closed position in which both first pads are biased against the first brake disc (5) and actuate a parking-braking force, and vice versa;
and wherein said second brake caliper (8) comprises:
- a pair of second pads positioned opposite the second brake disc (6);
- at least one pair of second actuators (3), configured to apply and release a second braking force (F2) on the pair of second pads, so as to move the pair of second pads from an open position, in which both second pads are positioned at a maximum distance from the second brake disc (6) and do not actuate a parking-braking force, to a closed position in which both second pads are biased against the second brake disc (6) and actuate a parking-braking force, and vice versa.

10. A braking system (1) of a vehicle configured to activate and deactivate a parking-braking force, the braking system (1) comprising at least:
- a first brake caliper (7) comprising:
- a first brake disc (5);
- at least one first brake pad facing the first brake disc (5);
- at least one first actuator (2), configured to apply and release a first braking force (F1) on the at least one first pad, so as to move the at least one first pad from an open position, in which the at least one first pad is positioned at a maximum distance from the first brake disc (5) and does not actuate a parking-braking force, to a closed position in which the at least one first pad is biased against the first brake disc (5) and applies a parking-braking force, and vice versa;
- a second brake caliper (8) comprising:
- a second brake disc (6);
- at least one second brake pad facing the second brake disc (6);
- at least one second actuator (3), configured to apply and release a second braking force (F2) on the at least one second pad so as to move the at least one second pad from an open position, in which the at least one second pad is positioned at a maximum distance from the second brake disc (6) and does not actuate a braking force, to a closed position in which the at least one second pad is biased against the second brake disc (6) and applies a parking-braking force, and vice versa;
- an electronic processing unit (4), configured to control the actuation of the at least one first actuator (2) of the first brake caliper (7) and the at least one second actuator (3) of the second brake caliper (8);
- detection means, operatively connected to the electronic processing unit (4), configured to detect, either directly or indirectly, the value of the first braking force (F1) actuated by the at least one first actuator (2) on the at least one first pad, and to detect, either directly or indirectly, the value of the second braking force (F2) actuated by the at least one second actuator (3) on the at least one second pad,
wherein the brake system (1) is **characterized in that** it is configured to deactivate the parking-braking force by performing a method according to any one of the preceding claims.

11. A system (1) according to claim 10, comprising an actuating device operatively connected to the electronic processing unit (4),
wherein the electronic processing unit (4) is configured to actuate the at least one first actuator (2) so as to release the first braking force (F1) and reduce the value of the first braking force (F1), upon the reception, by the electronic processing unit (4), of a parking-braking force deactivation request signal,
wherein the parking-braking force deactivation request signal is sent by the actuating device upon actuation of said actuating device,
and wherein said actuating device is actuatable by a user,
and/or wherein the braking system (1) comprises a signaling device operatively connected to the electronic processing unit (4),
wherein the electronic processing unit (4) is configured to send a parking-braking force deactivation signal to the signaling device,
and wherein the parking-braking force deactivation signal is viewable by a user by means of the signaling device.

12. A braking system (1) according to claim 10 or 11, wherein the first brake caliper (7) comprises:
- a pair of first pads positioned opposite to the first brake disc (5);
- at least one pair of first actuators (2), configured to apply and release a first braking force (F1) on the pair of first pads, so as to move the pair of first pads from an open position in which both first pads are positioned at a maximum distance from the first brake disc (5) and do not actuate a parking-braking force, to a closed position in which both first pads are biased against the first brake disc (5) and actuate a parking-braking force, and vice versa;
and wherein said second brake caliper (8) comprises:
- a pair of second pads positioned opposite the second brake disc (6);
- at least one pair of second actuators (3), configured to apply and release a second braking force (F2) on the pair of second pads, so as to move the pair of second pads from an open position, in which both second pads are positioned at a maximum distance from the second brake disc (6) and do not actuate a parking-braking force, to a closed position in which both second pads are biased against the second brake disc (6) and actuate a parking-braking force, and vice versa.

## Patentansprüche

1. Verfahren zur Steuerung eines Bremssystems (1) eines Fahrzeugs zur Deaktivierung einer Feststellbremskraft, die von dem Bremssystem (1) aktiviert wird, wobei das Bremssystem (1) von dem Typ ist, der mindestens umfasst:
- einen ersten Bremssattel (7), umfassend:
- eine erste Bremsscheibe (5);
- mindestens einen ersten Bremsbelag, der der ersten Bremsscheibe (5) gegenüberliegt;
- mindestens einen ersten Aktuator (2), der dazu konfiguriert ist, eine erste Bremskraft (F1) auf den mindestens einen ersten Belag auszuüben und freizusetzen, um den mindestens einen ersten Belag von einer Offenstellung, in der sich der mindestens eine erste Belag in einem maximalen Abstand zu der ersten Bremsscheibe (5) positioniert ist und keine Feststellbremskraft aktiviert, in eine Schließstellung zu bewegen, in der der mindestens eine erste Belag gegen die erste Bremsscheibe (5) gedrückt wird und eine Feststellbremskraft aktiviert, und umgekehrt;
- einen zweiten Bremssattel (8), umfassend:
- eine zweite Bremsscheibe (6);
- mindestens einen zweiten Bremsbelag, der der zweiten Bremsscheibe (6) gegenüberliegt;
- mindestens einen zweiten Aktuator (3), der dazu konfiguriert ist, eine zweite Bremskraft (F2) auf den mindestens einen zweiten Belag auszuüben und freizusetzen, um den mindestens einen zweiten Belag von einer Offenstellung, in der sich der mindestens eine zweite Belag in einem maximalen Abstand zu der zweiten Bremsscheibe (6) positioniert ist und keine Bremskraft aktiviert, in eine Schließstellung zu bewegen, in der der mindestens eine zweite Belag gegen die zweite Bremsscheibe (6) gedrückt wird und eine Feststellbremskraft aktiviert, und umgekehrt;
- eine elektronische Verarbeitungseinheit (4), die dazu konfiguriert ist, das Betätigen des mindestens einen ersten Aktuators (2) des ersten Bremssattels (7) und des mindestens einen zweiten Aktuators (3) des zweiten Bremssattels (8) zu steuern;
- Erfassungsmittel, die operativ mit der elektronischen Verarbeitungseinheit (4) verbunden sind, und die dazu konfiguriert sind, entweder direkt oder indirekt den Wert der ersten Bremskraft (F1), die von dem mindestens einen ersten Aktuator (2) auf den mindestens einen ersten Belag aktiviert wird, sowie den Wert der zweiten Bremskraft (F2), die von dem mindestens einen zweiten Aktuator (3) auf den mindestens einen zweiten Belag aktiviert wird, zu erfassen;
wobei das Verfahren durch di folgenden Schritte gekennzeichnet ist:
- mittels der elektronischen Verarbeitungseinheit (4), Betätigen des mindestens einen ersten Aktuators (2) des ersten Bremssattels (7), um die erste Bremskraft (F1) freizusetzen und den Wert der ersten Bremskraft (F1) zu reduzieren;
- Erfassen des Werts der ersten Bremskraft (F1) während der Betätigung des mindestens eines ersten Aktuators (2) und mittels der Erfassungsmittel;
- zu einem ersten Zeitpunkt (t1), in dem es erfasst wird, dass die erste Bremskraft (F1) auf einen Wert reduziert wird, der im Wesentlichen gleich null ist, Stoppen des mindestens einen ersten Aktuators (2) und Betätigen des mindestens einen zweiten Aktuators (3) mittels der elektronischen Verarbeitungseinheit (4), um die zweite Bremskraft (F2) freizusetzen und den Wert der zweiten Bremskraft (F2) zu reduzieren;
- Reduzieren des Werts der zweiten Bremskraft (F2) auf einen Wert, der im Wesentlichen gleich null ist.

2. Verfahren nach Anspruch 1 umfassend, nach dem Schritt von Stoppen des mindestens einen ersten Aktuators (2) und von Betätigen des mindestens einen zweiten Aktuators (3) mittels der elektronischen Verarbeitungseinheit (4), um die zweite Bremskraft (F2) freizusetzen und den Wert der zweiten Bremskraft (F2) zu reduzieren, die folgenden Schritte:
- Erfassen des Wertes der zweiten Bremskraft (F2) während der Betätigung des mindestens einen zweiten Aktuators (3) und mittels der Erfassungsmittel;
- zu einem Zeitpunkt, in dem es erfasst wird, dass die zweite Bremskraft (F2) auf einen Wert, der im Wesentlichen gleich null ist, reduziert wird, Fortsetzen der Betätigung des mindestens einen zweiten Aktuators (3), um den mindestens einen zweiten Bremsbelag von der zweiten Bremsscheibe (6) zu trennen und den mindestens einen zweiten Bremsbelag zu der Offenstellung zu bewegen;
- Erfassen der Position des mindestens einen zweiten Belags, direkt oder indirekt, während der Betätigung des mindestens einen zweiten Belags und mittels der Erfassungsmittel;
- zu einem zweiten Zeitpunkt (t2), in dem es erfasst wird, dass der mindestens eine zweite Belag im Wesentlichen in der Offenstellung positioniert ist, Stoppen des mindestens einen zweiten Aktuators (3) und Betätigen des mindestens einen ersten Aktuators (2) mittels der elektronischen Verarbeitungseinheit (4), um den mindestens einen ersten Belag von der ersten Bremsscheibe (5) zu trennen und den mindestens einen ersten Belag zu der Offenstellung zu bewegen;
und optional:
- Erfassen der Position des mindestens einen ersten Belags, direkt oder indirekt, während der Betätigung des mindestens einen ersten Belags und mittels der Erfassungsmittel;
- Stoppen des mindestens einen ersten Aktuators (2) zu einem dritten Zeitpunkt (t3), in dem es erfasst wird, dass der mindestens eine erste Belag im Wesentlichen in der Offenstellung positioniert ist.

3. Verfahren nach Anspruch 1 umfassend, nach dem Schritt von Stoppen des mindestens einen ersten Aktuators (2) und von Betätigen des mindestens einen zweiten Aktuators (3) mittels der elektronischen Verarbeitungseinheit (4), um die zweite Bremskraft (F2) freizusetzen und den Wert der zweiten Bremskraft (F2) zu reduzieren, die folgenden Schritte:
- Erfassen des Wertes der zweiten Bremskraft (F2) während der Betätigung des mindestens einen zweiten Belags und mittels der Erfassungsmittel;
- zu dem Zeitpunkt, in dem es erfasst wird, dass die zweite Bremskraft (F2) auf einen Wert, der im Wesentlichen gleich null ist, reduziert wird, Stoppen der Betätigung des mindestens einen zweiten Aktuators (3) um den mindestens einen ersten Aktuator (2) mittels der elektronischen Verarbeitungseinheit (4) zu betätigen, um den mindestens einen ersten Bremsbelag von der ersten Bremsscheibe (5) zu trennen und den mindestens einen ersten Bremsbelag zu der Offenstellung zu bewegen;
- Erfassen der Position des mindestens einen ersten Belags, direkt oder indirekt, während der Betätigung des mindestens einen ersten Belags und mittels der Erfassungsmittel;
- zu dem Zeitpunkt, in dem es erfasst wird, dass der mindestens eine erste Belag im Wesentlichen in der Offenstellung positioniert ist, Stoppen des mindestens einen ersten Aktuators (2) und Betätigen des mindestens einen zweiten Aktuators (3) mittels der elektronischen Verarbeitungseinheit (4), um den mindestens einen zweiten Belag von der zweiten Bremsscheibe (6) zu trennen und den mindestens einen zweiten Belag zu der Offenstellung zu bewegen;
und optional:
- Erfassen der Position des mindestens einen zweiten Belags, direkt oder indirekt, während der Betätigung des mindestens einen zweiten Belags und mittels der Erfassungsmittel;
- Stoppen des mindestens einen zweiten Aktuators (3) zu einem Zeitpunkt, in dem es erfasst wird, dass der mindestens eine zweite Belag im Wesentlichen in der Offenstellung positioniert ist.

4. Verfahren nach einem der vorhergehenden Ansprüche, wobei der Schritt von Erfassen, mittels der Erfassungsmittel, des Wertes der ersten Bremskraft (F1) umfasst:
- Erfassen der Winkelposition des mindestens einen ersten Aktuators (2) mittels der Erfassungsmittel; und
- Berechnen, mittels der elektronischen Verarbeitungseinheit (4), des Wertes der ersten Bremskraft (F1) basierend auf der Winkelposition des mindestens einen ersten Aktuators (2); oder
- Erfassen des Wertes eines ersten Versorgungsstroms (i1), der den mindestens einen ersten Aktuator (2) versorgt; und
- Berechnen, mittels der elektronischem Verarbeitungseinheit (4), des Wertes der ersten Bremskraft (F1) basierend auf dem Wert des ersten Versorgungsstroms (i1), der den mindestens einen ersten Aktuator (2) versorgt;
und/oder
wobei der Schritt von Erfassen, mittels der Erfassungsmittel, des Wertes der zweiten Bremskraft (F2) umfasst:
- Erfassen der Winkelposition des mindestens eines zweiten Aktuators (3) mittels der Erfassungsmittel; und
- Berechnen, mittels der elektronischen Verarbeitungseinheit (4), des Wertes der zweiten Bremskraft (F2) basierend auf der Winkelposition des mindestens eines zweiten Aktuators (3); oder
- Erfassen des Wertes eines zweiten Versorgungsstroms (i2), der den mindestens einen zweiten Aktuator (3) versorgt; und
- Berechnen, mittels der elektronischen Verarbeitungseinheit (4), des Wertes der zweiten Bremskraft (F2) basierend auf dem Wert des zweiten Versorgungsstroms (i2), der den mindestens einen zweiten Aktuator (3) versorgt.

5. Verfahren nach Anspruch 2, wobei der Schritt von Erfassen direkt oder indirekt der Position des mindestens einen zweiten Belags mittels der Erfassungsmittel umfasst:
- Erfassen des Ablaufens eines vorbestimmten Zeitintervalls, beginnend von dem Zeitpunkt, in dem es erfasst wird, dass die zweite Bremskraft (F2) auf einen Wert, der im Wesentlichen gleich null ist, reduziert wird, und mittels der Erfassungsmittel;
- Zuordnen der Positionierung des mindestens einen zweiten Belags in der Offenstellung am Ende des vorbestimmten Zeitintervalls und mittels der elektronischen Verarbeitungseinheit (4);
oder umfasst:
- Erfassen der Winkelposition des mindestens einen zweiten Aktuators (3) mittels der Erfassungsmittel;
- Zuordnen der Positionierung des mindestens einen zweiten Belags in der Offenstellung einer vorbestimmten Winkelposition des mindestens einen zweiten Aktuators (3) mittels der elektronischen Verarbeitungseinheit (4).

6. Verfahren nach Anspruch 5, wobei der Schritt von Erfassen direkt oder indirekt der Position des mindestens einen ersten Belags während der Betätigung des mindestens einen ersten Belags und mittels der Erfassungsmittel umfasst:
- Erfassen des Ablaufens eines vorbestimmten Zeitintervalls, beginnend von dem Zeitpunkt, in dem der mindestens eine zweite Aktuator (3) gestoppt wird, und mittels der Erfassungsmittel
- Zuordnen der Positionierung des mindestens einen ersten Belags in der Offenstellung am Ende des vorbestimmten Zeitintervalls und mittels der elektronischen Verarbeitungseinheit (4);
oder umfasst:
- Erfassen der Winkelposition des mindestens einen ersten Aktuators (2) mittels der Erfassungsmittel;
- Zuordnen, mittels der elektronischen Verarbeitungseinheit, der Positionierung des mindestens einen ersten Belags in der Offenstellung einer vorbestimmten Winkelposition des mindestens einen ersten Aktuators (2).

7. Verfahren nach einem der vorhergehenden Ansprüche, wobei der Schritt von Betätigen, mittels der elektronischen Verarbeitungseinheit (4), des mindestens einen ersten Aktuators (2), um die erste Bremskraft (F1) freizusetzen und den Wert der ersten Bremskraft (F1) zu reduzieren, bei Empfang eines Deaktivierungsanforderungssignals der Feststellbremskraft durch die elektronische Verarbeitungseinheit (4) aktiviert wird,
wobei das Deaktivierungsanforderungssignal der Feststellbremskraft von einer Betätigungsvorrichtung, die operativ mit der elektronischen Verarbeitungseinheit (4) verbunden ist, bei Betätigung der Betätigungsvorrichtung gesendet wird,
wobei die Betätigungsvorrichtung durch einen Benutzer betätigt werden kann.

8. Verfahren nach Anspruch 2, umfassend, nach dem Schritt von Stoppen des mindestens einen ersten Aktuators (2) zu dem Zeitpunkt, in dem es erfasst wird, dass der mindestens eine erste Belag im Wesentlichen in der Offenstellung positioniert ist, den folgenden Schritt:
- Senden, von der elektronischen Verarbeitungseinheit, eines Deaktivierungssignals der Feststellbremskraft an eine Signalisierungsvorrichtung, die operativ mit der elektronischen Verarbeitungseinheit (4) verbunden ist,
wobei das Deaktivierungssignal der Feststellbremskraft optional durch einen Benutzer mittels der Signalisierungsvorrichtung sichtbar ist.

9. Verfahren nach einem der vorhergehenden Ansprüche zur Steuerung eines Bremssystems (1) des Typs, das einen ersten Bremssattel (7) und einen zweiten Bremssattel (8) umfasst,
wobei der erste Bremssattel (7) umfasst:
- ein Paar erster Beläge, die der ersten Bremsscheibe gegenüber positioniert sind;
- mindestens ein Paar erster Aktuatoren (2), die dazu konfiguriert sind, eine erste Bremskraft (F1) auf das Paar erster Beläge auszuüben und freizusetzen, um das Paar erster Beläge von einer Offenstellung, in der beide erste Beläge in einem maximalen Abstand zu der ersten Bremsscheibe (5) positioniert sind und keine Feststellbremskraft aktivieren, in eine Schließstellung zu bewegen, in der beide erste Beläge gegen die erste Bremsscheibe (5) gedrückt werden und eine Feststellbremskraft aktivieren, und umgekehrt;
und wobei der zweite Bremssattel (8) umfasst:
- ein Paar zweiter Beläge, die der zweiten Bremsscheibe (6) gegenüber positioniert sind;
- mindestens ein Paar zweiter Aktuatoren (3), die dazu konfiguriert sind, eine zweite Bremskraft (F2) auf das Paar zweiter Beläge auszuüben und freizusetzen, um das Paar zweiter Beläge von einer Offenstellung, in der beide zweite Beläge in einem maximalen Abstand zu der zweiten Bremsscheibe (6) positioniert sind und keine Feststellbremskraft aktivieren, in eine Schließstellung zu bewegen, in der beide zweiten Beläge gegen die zweite Bremsscheibe (6) gedrückt werden und eine Feststellbremskraft aktivieren, und umgekehrt.

10. Bremssystem (1) eines Fahrzeugs, das dazu konfiguriert ist, eine Feststellbremskraft zu aktivieren und zu deaktivieren, das Bremssystem (1) mindestens umfassend:
- einen ersten Bremssattel (7), umfassend:
- eine erste Bremsscheibe (5);
- mindestens einen ersten Bremsbelag, der der ersten Bremsscheibe (5) gegenüberliegt;
- mindestens einen ersten Aktuator (2), der dazu konfiguriert ist, eine erste Bremskraft (F1) auf den mindestens einen ersten Belag auszuüben und freizusetzen, um den mindestens einen ersten Belag von einer Offenstellung, in der der mindestens eine erste Belag in einem maximalen Abstand zu der ersten Bremsscheibe (5) positioniert ist und keine Feststellbremskraft aktiviert, in eine Schließstellung zu bewegen, in der der mindestens eine erste Belag gegen die erste Bremsscheibe (5) gedrückt wird und eine Feststellbremskraft aktiviert, und umgekehrt;
- einen zweiten Bremssattel (8), umfassend:
- eine zweite Bremsscheibe (6);
- mindestens einen zweiten Bremsbelag, der der zweiten Bremsscheibe (6) gegenüberliegt;
- mindestens einen zweiten Aktuator (3), der dazu konfiguriert ist, eine zweite Bremskraft (F2) auf den mindestens einen zweiten Belag auszuüben und freizusetzen, um den mindestens einen zweiten Belag von einer Offenstellung, in der sich der mindestens eine zweite Belag in einem maximalen Abstand zu der zweiten Bremsscheibe (6) positioniert ist und keine Bremskraft aktiviert, in eine Schließstellung zu bewegen, in der der mindestens eine zweite Belag gegen die zweite Bremsscheibe (6) gedrückt wird und eine Feststellbremskraft ausübt, und umgekehrt;
- eine elektronische Verarbeitungseinheit (4), die dazu konfiguriert ist, das Betätigen des mindestens einen ersten Aktuators (2) des ersten Bremssattels (7) und des mindestens einen zweiten Aktuators (3) des zweiten Bremssattels (8) zu steuern;
- Erfassungsmittel, die operativ mit der elektronischen Verarbeitungseinheit (4) verbunden sind und die dazu konfiguriert sind, entweder direkt oder indirekt den Wert der ersten Bremskraft (F1), die von dem mindestens einen ersten Aktuator (2) auf den mindestens einen ersten Belag aktiviert wird zu erfassen sowie entweder direkt oder indirekt den Wert der zweiten Bremskraft (F2), die von dem mindestens einen zweiten Aktuator (3) auf den mindestens einen zweiten Belag aktiviert wird zu erfassen,
wobei das Bremssystem (1) **dadurch gekennzeichnet ist, dass** es dazu konfiguriert ist, die Feststellbremskraft durch Durchführung eines Verfahrens nach einem der vorhergehenden Ansprüche zu deaktivieren.

11. System (1) nach Anspruch 10, umfassend eine Betätigungsvorrichtung, die operativ mit der elektronischen Verarbeitungseinheit (4) verbunden ist, wobei die elektronische Verarbeitungseinheit (4) dazu konfiguriert ist, den mindestens einen ersten Aktuator (2) zu betätigen, um die erste Bremskraft (F1) freizusetzen und den Wert der ersten Bremskraft (F1), bei Empfang durch die elektronische Verarbeitungseinheit (4) eines Deaktivierungsanforderungssignals der Feststellbremskraft, zu reduzieren,
wobei das Deaktivierungsanforderungssignal der Feststellbremskraft durch die Betätigungsvorrichtung bei der Betätigung der Betätigungsvorrichtung gesendet wird,
und wobei die Betätigungsvorrichtung durch einen Benutzer betätigt werden kann,
und/oder wobei das Bremssystem (1) eine Signalisierungsvorrichtung umfasst, die operativ mit der elektronischen Verarbeitungseinheit (4) verbunden ist, wobei die elektronische Verarbeitungseinheit (4) dazu konfiguriert ist, ein Deaktivierungssignal der Feststellbremskraft an die Signalisierungsvorrichtung zu senden, und wobei das Deaktivierungssignal der Feststellbremskraft durch einen Benutzer mittels der Signalisierungsvorrichtung sichtbar ist.

12. Bremssystem (1) nach Anspruch 10 oder 11, wobei der erste Bremssattel (7) umfasst:
- ein Paar erster Beläge, die der ersten Bremsscheibe (5) gegenüber positioniert sind;
- mindestens ein Paar erster Aktuatoren (2), die dazu konfiguriert sind, eine erste Bremskraft (F1) auf das Paar erster Beläge auszuüben und freizusetzen, um das Paar erster Beläge von einer Offenstellung, in der beide erste Beläge in einem maximalen Abstand zu der ersten Bremsscheibe (5) positioniert sind und keine Feststellbremskraft aktivieren, in eine Schließstellung zu bewegen, in der beide erste Beläge gegen die erste Bremsscheibe (5) gedrückt werden und eine Feststellbremskraft aktivieren, und umgekehrt;
und wobei der zweite Bremssattel (8) umfasst:
- ein Paar zweiter Beläge, die der zweiten Bremsscheibe (6) gegenüber positioniert sind;
- mindestens ein Paar zweiter Aktuatoren (3), die dazu konfiguriert sind, eine zweite Bremskraft (F2) auf das Paar zweiter Beläge auszuüben und freizusetzen, um das Paar zweiter Beläge von einer Offenstellung, in der beide zweite Beläge in einem maximalen Abstand zu der zweiten Bremsscheibe (6) positioniert sind und keine Feststellbremskraft aktivieren, in eine Schließstellung zu bewegen, in der beide zweite Beläge gegen die zweite Bremsscheibe (6) gedrückt werden und eine Feststellbremskraft aktivieren, und umgekehrt.

## Revendications

1. Procédé de commande d'un système de freinage (1) d'un véhicule pour désactiver une force de freinage de stationnement actionnée par le système de freinage (1), le système de freinage (1) étant du type comprenant au moins :
un premier étrier de frein (7) comprenant :
un premier disque de frein (5) ;
au moins une première plaquette de frein faisant face au premier disque de frein (5);
au moins un premier actionneur (2), configuré pour appliquer et relâcher une première force de freinage (F1) sur ladite au moins une première plaquette, de manière à faire passer ladite au moins une première plaquette d'une position ouverte, dans laquelle ladite au moins une première plaquette est positionnée à une distance maximale du premier disque de frein (5) et n'actionne pas une force de freinage de stationnement, à une position fermée dans laquelle ladite au moins une première plaquette est appliquée contre le premier disque de frein (5) et applique une force de freinage de stationnement, et vice versa ;
un second étrier de frein (8) comprenant :
un second disque de frein (6) ;
au moins une seconde plaquette de frein faisant face au second disque de frein (6) ;
au moins un second actionneur (3), configuré pour appliquer et relâcher une seconde force de freinage (F2) sur ladite au moins une seconde plaquette de manière à faire passer ladite au moins une seconde plaquette d'une position ouverte, dans laquelle ladite au moins une seconde plaquette est positionnée à une distance maximale du second disque de frein (6) et n'actionne pas une force de freinage, à une position fermée dans laquelle ladite au moins une seconde plaquette est appliquée contre le second disque de frein (6) et applique une force de freinage de stationnement, et vice versa ;
unité de traitement électronique (4), configurée pour commander l'actionnement dudit au moins un premier actionneur (2) du premier étrier de frein (7) et dudit au moins un second actionneur (3) du second étrier de frein (8) ;
moyens de détection, connectés fonctionnellement à l'unité de traitement électronique (4), configurés pour détecter, soit directement soit indirectement, la valeur de la première force de freinage (F1) actionnée par ledit au moins un premier actionneur (2) sur ladite au moins une première plaquette, et pour détecter, soit directement soit indirectement, la valeur de la seconde force de freinage (F2) actionnée par ledit au moins un second actionneur (3) sur ladite au moins une seconde plaquette,
le procédé étant **caractérisé par** les étapes de :
par l'unité de traitement électronique (4), actionner au moins un premier actionneur (2) du premier étrier de frein (7) de manière à libérer la première force de freinage (F1) et réduire la valeur de la première force de freinage (F1) ;
détecter la valeur de la première force de freinage (F1) pendant l'actionnement dudit au moins un premier actionneur (2) et au moyen desdits moyens de détection ;
à un premier instant de temps (t1) où il est détecté que la première force de freinage (F1) est réduite à une valeur sensiblement égale à zéro, arrêter ledit au moins un premier actionneur (2) et actionner ledit au moins un second actionneur (3), au moyen de l'unité de traitement électronique (4), de manière à libérer la seconde force de freinage (F2) et réduire la valeur de la seconde force de freinage (F2) ;
réduire la valeur de la seconde force de freinage (F2) à une valeur sensiblement égale à zéro.

2. Procédé selon la revendication 1, comprenant après l'étape d'arrêt dudit au moins un premier actionneur (2) et l'actionnement dudit au moins un second actionneur (3), au moyen de l'unité de traitement électronique (4), de manière à libérer la seconde force de freinage (F2) et réduire la valeur de la seconde force de freinage (F2), les étapes de :
détecter la valeur de la seconde force de freinage (F2) pendant l'actionnement dudit au moins un second actionneur (3) et au moyen desdits moyens de détection ;
à l'instant où il est détecté que la seconde force de freinage (F2) est réduite à une valeur sensiblement égale à zéro, continuer l'actionnement dudit au moins un second actionneur (3) de manière à séparer ladite au moins une seconde plaquette du second disque de frein (6) et déplacer ladite au moins une seconde plaquette vers la position ouverte ;
détecter la position de ladite au moins une seconde plaquette, soit directement soit indirectement, pendant l'actionnement de ladite au moins une seconde plaquette et au moyen desdits moyens de détection ;
à un second instant de temps (t2) où il est détecté que ladite au moins une seconde plaquette est positionnée sensiblement en position ouverte, arrêter ledit au moins un second actionneur (3) et actionner ledit au moins un premier actionneur (2), par l'unité de traitement électronique (4), de manière à séparer ladite au moins une première plaquette du premier disque de frein (5) et déplacer ladite au moins une première plaquette vers la position ouverte;
et éventuellement :
détecter la position de ladite au moins une première plaquette, soit directement soit indirectement, pendant l'actionnement de ladite au moins une première plaquette et au moyen desdits moyens de détection ;
arrêter ledit au moins un premier actionneur (2) à un troisième instant (t3) où il est détecté que ladite au moins une première plaquette est positionnée sensiblement en position ouverte.

3. Procédé selon la revendication 1, comprenant après l'étape d'arrêt dudit au moins un premier actionneur (2) et l'actionnement dudit au moins un second actionneur (3), au moyen de l'unité de traitement électronique (4), de manière à libérer la seconde force de freinage (F2) et réduire la valeur de la seconde force de freinage (F2), les étapes de :
détecter la valeur de la seconde force de freinage (F2) pendant l'actionnement dudit au moins une seconde plaquette (3) et au moyen desdits moyens de détection ;
à l'instant où il est détecté que la seconde force de freinage (F2) est réduite à une valeur sensiblement égale à zéro, arrêter l'actionnement dudit au moins un second actionneur (3) pour actionner ledit au moins un premier actionneur (2), au moyen de l'unité de traitement électronique (4), de manière à séparer ladite au moins une première plaquette du premier disque de frein (5) et déplacer ladite au moins une première plaquette vers la position ouverte ;
détecter la position de ladite au moins une première plaquette, soit directement soit indirectement, pendant l'actionnement de ladite au moins une première plaquette et au moyen desdits moyens de détection ;
à l'instant où il est détecté que ladite au moins une première plaquette est positionnée sensiblement en position ouverte, arrêter ledit au moins un premier actionneur (2) et actionner ledit au moins un second actionneur (3), au moyen de l'unité de traitement électronique (4), de manière à séparer ladite au moins une seconde plaquette du second disque de frein (6) et déplacer ladite au moins une seconde plaquette vers la position ouverte;
et éventuellement :
détecter la position de ladite au moins une seconde plaquette, soit directement soit indirectement, pendant l'actionnement de ladite au moins une seconde plaquette et au moyen desdits moyens de détection ;
arrêter ledit au moins un second actionneur (3) à un instant où il est détecté que ladite au moins une seconde plaquette est positionnée sensiblement en position ouverte.

4. Procédé selon l'une quelconque des revendications précédentes, dans lequel l'étape de détection, au moyen desdits moyens de détection, de la valeur de la première force de freinage (F1) comprend :
détecter la position angulaire dudit au moins un premier actionneur (2) au moyen desdits moyens de détection ; et
calculer, au moyen de l'unité de traitement électronique (4), la valeur de ladite première force de freinage (F1) en fonction de la position angulaire dudit au moins un premier actionneur (2) ; ou
détecter la valeur d'un premier courant d'alimentation (i1) qui alimente ledit au moins un premier actionneur (2) ; et
calculer, au moyen de l'unité de traitement électronique (4), la valeur de la première force de freinage (F1) en fonction de la valeur dudit premier courant d'alimentation (i1) alimentant ledit au moins un premier actionneur (2),
et/ou
où l'étape de détection, au moyen desdits moyens de détection, de la valeur de la seconde force de freinage (F2) comprend :
détecter la position angulaire dudit au moins un second actionneur (3) au moyen desdits moyens de détection ; et
calculer, au moyen de l'unité de traitement électronique (4), la valeur de ladite seconde force de freinage (F2) en fonction de la position angulaire dudit au moins un second actionneur (3) ; ou
détecter la valeur d'un second courant d'alimentation (i2) qui alimente ledit au moins un second actionneur (3) ; et
calculer, au moyen de l'unité de traitement électronique (4), la valeur de ladite seconde force de freinage (F2) en fonction de la valeur dudit second courant d'alimentation (i2) alimentant ledit au moins un second actionneur (3).

5. Procédé selon la revendication 2, dans lequel l'étape de détection directe ou indirecte de la position de ladite au moins une seconde plaquette au moyen desdits moyens de détection comprend :
détecter l'écoulement d'un intervalle de temps prédéterminé, à partir de l'instant où il est détecté que la seconde force de freinage (F2) est réduite à une valeur sensiblement égale à zéro, et au moyen desdits moyens de détection ;
associer le positionnement de ladite au moins une seconde plaquette en position ouverte à la fin dudit intervalle de temps prédéterminé et au moyen de l'unité de traitement électronique (4) ;
ou comprend :
détecter la position angulaire dudit au moins un second actionneur (3) au moyen desdits moyens de détection ;
associer le positionnement de ladite au moins une seconde plaquette en position ouverte à une position angulaire prédéterminée dudit au moins un second actionneur (3) au moyen de l'unité de traitement électronique (4).

6. Procédé selon la revendication 5, dans lequel l'étape de détection directe ou indirecte de la position de ladite au moins une première plaquette pendant l'actionnement de ladite au moins une première plaquette et au moyen desdits moyens de détection comprend:
détecter l'écoulement d'un intervalle de temps prédéterminé, à partir de l'instant où ledit au moins un second actionneur (3) est arrêté, et au moyen desdits moyens de détection ;
associer le positionnement dudit au moins une première plaquette en position ouverte à la fin dudit intervalle de temps prédéterminé et au moyen de l'unité de traitement électronique (4) ;
ou comprend :
détecter la position angulaire dudit au moins un premier actionneur (2) au moyen desdits moyens de détection ;
associer, au moyen de l'unité de traitement électronique (4), le positionnement de ladite au moins une première plaquette en position ouverte à une position angulaire prédéterminée dudit au moins un premier actionneur (2).

7. Procédé selon l'une quelconque des revendications précédentes, dans lequel l'étape d'actionner, au moyen de l'unité de traitement électronique (4), ledit au moins un premier actionneur (2) de manière à libérer la première force de freinage (F1) et réduire la valeur de la première force de freinage (F1), est actionnée lors de la réception d'un signal de demande de désactivation de la force de freinage de stationnement par l'unité de traitement électronique (4),
où le signal de demande de désactivation de la force de freinage de stationnement est envoyé par un dispositif d'actionnement connecté fonctionnellement à l'unité de traitement électronique (4), lors de l'actionnement dudit dispositif d'actionnement, ledit dispositif d'actionnement étant actionnable par un utilisateur.

8. Procédé selon la revendication 2 comprenant, après l'étape d'arrêt dudit au moins un premier actionneur (2) à l'instant où il est détecté que ladite au moins une première plaquette est positionnée sensiblement en position ouverte, l'étape de :
envoyer, depuis l'unité de traitement électronique (4) vers un dispositif de signalisation connecté fonctionnellement à l'unité de traitement électronique (4), un signal de désactivation de la force de freinage de stationnement ;
où le signal de désactivation de la force de freinage de stationnement est optionnellement visible par un utilisateur au moyen dudit dispositif de signalisation.

9. Procédé selon l'une quelconque des revendications précédentes, pour commander un système de freinage (1) du type comprenant un premier étrier de frein (7) et un second étrier de frein (8),
où ledit premier étrier de frein (7) comprend :
une paire de premières plaquettes positionnées en vis-à-vis du premier disque de frein;
au moins une paire de premiers actionneurs (2), configurés pour appliquer et relâcher une première force de freinage (F1) sur ladite paire de premières plaquettes, de manière à déplacer la paire de premières plaquettes d'une position ouverte dans laquelle les deux premières plaquettes sont positionnées à une distance maximale du premier disque de frein (5) et n'actionnent pas une force de freinage de stationnement, à une position fermée dans laquelle les deux premières plaquettes sont appliquées contre le premier disque de frein (5) et actionnent une force de freinage de stationnement, et vice versa ;
et où ledit second étrier de frein (8) comprend :
une paire de secondes plaquettes positionnées en vis-à-vis du second disque de frein (6) ;
au moins une paire de seconds actionneurs (3), configurés pour appliquer et relâcher une seconde force de freinage (F2) sur ladite paire de secondes plaquettes, de manière à déplacer la paire de secondes plaquettes d'une position ouverte, dans laquelle les deux secondes plaquettes sont positionnées à une distance maximale du second disque de frein (6) et n'actionnent pas une force de freinage de stationnement, à une position fermée dans laquelle les deux secondes plaquettes sont appliquées contre le second disque de frein (6) et actionnent une force de freinage de stationnement, et vice versa.

10. Système de freinage (1) d'un véhicule configuré pour activer et désactiver une force de freinage de stationnement, le système de freinage (1) comprenant au moins :
un premier étrier de frein (7) comprenant :
un premier disque de frein (5) ;
au moins une première plaquette de frein faisant face au premier disque de frein (5); au moins un premier actionneur (2), configuré pour appliquer et relâcher une première force de freinage (F1) sur ladite au moins une première plaquette, de manière à déplacer ladite au moins une première plaquette d'une position ouverte, dans laquelle ladite au moins une première plaquette est positionnée à une distance maximale du premier disque de frein (5) et n'actionne pas une force de freinage de stationnement, à une position fermée dans laquelle ladite au moins une première plaquette est appliquée contre le premier disque de frein (5) et applique une force de freinage de stationnement, et vice versa ;
- un second étrier de frein (8) comprenant :
- - un second disque de frein (6) ;
- au moins une seconde plaquette de frein faisant face au second disque de frein (6) ;
- au moins un second actionneur (3), configuré pour appliquer et relâcher une seconde force de freinage (F2) sur ladite au moins une seconde plaquette de manière à déplacer ladite au moins une seconde plaquette d'une position ouverte, dans laquelle ladite au moins une seconde plaquette est positionnée à une distance maximale du second disque de frein (6) et n'actionne pas une force de freinage, à une position fermée dans laquelle ladite au moins une seconde plaquette est appliquée contre le second disque de frein (6) et applique une force de freinage de stationnement, et vice versa ;
unité de traitement électronique (4), configurée pour commander l'actionnement dudit au moins un premier actionneur (2) du premier étrier de frein (7) et dudit au moins un second actionneur (3) du second étrier de frein (8) ;
moyens de détection, fonctionnellement connectés à l'unité de traitement électronique (4), configurés pour détecter, soit directement soit indirectement, la valeur de la première force de freinage (F1) actionnée par ledit au moins un premier actionneur (2) sur ladite au moins une première plaquette, et pour détecter, soit directement soit indirectement, la valeur de la seconde force de freinage (F2) actionnée par ledit au moins un second actionneur (3) sur ladite au moins une seconde plaquette,
où le système de freinage (1) est **caractérisé en ce qu'**il est configuré pour désactiver la force de freinage de stationnement en exécutant un procédé selon l'une quelconque des revendications précédentes.

11. Système (1) selon la revendication 10, comprenant un dispositif d'actionnement connecté fonctionnellement à l'unité de traitement électronique (4), où l'unité de traitement électronique (4) est configurée pour actionner ledit au moins un premier actionneur (2) de manière à libérer la première force de freinage (F1) et réduire la valeur de la première force de freinage (F1), lors de la réception, par l'unité de traitement électronique (4), d'un signal de demande de désactivation de la force de freinage de stationnement, où ledit signal de demande de désactivation de la force de freinage de stationnement est envoyé par ledit dispositif d'actionnement lors de l'actionnement dudit dispositif d'actionnement,
Et où ledit dispositif d'actionnement est actionnable par un utilisateur,
et/ou où le système de freinage (1) comprend un dispositif de signalisation connecté fonctionnellement à l'unité de traitement électronique (4),
où l'unité de traitement électronique (4) est configurée pour envoyer un signal de désactivation de la force de freinage de stationnement au dispositif de signalisation, et où ledit signal de désactivation de la force de freinage de stationnement est visible par un utilisateur au moyen dudit dispositif de signalisation.

12. Système de freinage (1) selon la revendication 10 ou 11, dans lequel le premier étrier de frein (7) comprend :
une paire de premières plaquettes positionnées en vis-à-vis du premier disque de frein;
au moins une paire de premiers actionneurs (2), configurés pour appliquer et relâcher une première force de freinage (F1) sur ladite paire de premières plaquettes, de manière à déplacer ladite paire de premières plaquettes d'une position ouverte dans laquelle les deux premières plaquettes sont positionnées à une distance maximale du premier disque de frein (5) et n'actionnent pas une force de freinage de stationnement, à une position fermée dans laquelle les deux premières plaquettes sont appliquées contre le premier disque de frein (5) et actionnent une force de freinage de stationnement, et vice versa ;
et où ledit second étrier de frein (8) comprend :
une paire de secondes plaquettes positionnées en vis-à-vis du second disque de frein (6) ;
au moins une paire de seconds actionneurs (3), configurés pour appliquer et relâcher une seconde force de freinage (F2) sur ladite paire de secondes plaquettes, de manière à déplacer ladite paire de secondes plaquettes d'une position ouverte, dans laquelle les deux secondes plaquettes sont positionnées à une distance maximale du second disque de frein (6) et n'actionnent pas une force de freinage de stationnement, à une position fermée dans laquelle les deux secondes plaquettes sont appliquées contre le second disque de frein (6) et actionnent une force de freinage de stationnement, et vice versa.
